# FASCICULE DE BREVET EUROPEEN

(11) **EP 0 744 315 B1**
(45) Date de publication et mention de la délivrance du brevet: **23.07.1997**
(21) Numéro de dépôt: 96470007.4
(22) Date de dépôt: 15.05.1996
(51) Int. Cl.: B60N 2/44

(54) **Armature profilée pour siège d'automobile**
Profilrahmen für Kraftfahrzeugsitze
Profiled frame for motor vehicle seats

(30) Priorité: 23.05.1995 FR 9506338
(43) Date de publication de la demande: 27.11.1996
(73) Titulaire: BERTRAND FAURE EQUIPEMENTS S.A., 92100 Boulogne (FR)
(72) Inventeur: Aufrere, Christophe, 91460 Marcoussis (FR); Hamelin, Bruno, 77380 Combs la Ville (FR)
(74) Mandataire: Schmit, Christian Norbert Marie

(56) Documents cités:
- EP-A- 0 372 339
- DE-A- 2 203 463
- DE-A- 3 916 698
- DE-A- 4 142 789
- FR-A- 2 424 146
- GB-A- 457 229

## Description

La présente invention concerne une armature de siège, notamment pour un siège d'automobile.

Des armatures connues pour ces sièges sont formées par une structure tubulaire, de forme générale en U, par exemple un tube cintré. D'autres armatures sont formées, au moins pour les parties latérales de l'armature, à partir de tôles embouties ou encore de profilés ayant une section en forme de U ou de C, obtenus par exemple par moulage d'alliages métalliques.

L'utilisation de profilés de ce type, dans lesquels la section en U ou en C est ouverte vers l'intérieur de l'armature, présente plusieurs inconvénients :
- au niveau de la liaison articulée entre l'armature de l'assise et celle du dossier, les mécanismes d'articulation et de réglage en inclinaison du dossier sont placés dans le creux du profilé et leur montage peut être de ce fait malaisé ;
- au niveau de la zone d'appui du dos de l'utilisateur, l'aile du profilé en retour vers l'intérieur génère un certain encombrement qui conduit soit à réduire la largeur du dossier, ce qui nuit au confort de l'utilisateur, soit, pour éviter ce premier inconvénient, à élargir l'armature, ce qui conduit alors à augmenter l'encombrement externe en largeur du siège.

La présente invention à pour but de résoudre ces problèmes et vise en plus à faciliter la fabrication des profilés destinés à constituer les armatures.

Avec ces objectifs en vue, l'invention a pour objet une armature de siège comportant deux flasques latéraux profilés constituant les côtés de l'armature, caractérisé en ce que les dits profilés ont une section générale en forme de Z comportant :
- une âme centrale s'étendant sensiblement dans un plan orthogonal à la direction transversale du siège,
- une première aile s'étendant vers l'intérieur de l'armature à partir du bord de la dite âme situé vers l'extérieur du siège,
- une deuxième aile s'étendant vers l'extérieur de l'armature à partir du bord de l'âme situé vers l'intérieur du siège.

Il est précisé que les termes "intérieur du siège" désignent l'emplacement de l'utilisateur. Ainsi, lorsque l'armature est une armature de dossier, la première aile est située vers l'arrière du dossier et la seconde aile est située vers l'avant ; lorsque l'armature est une armature d'assise, la première aile est située vers le dessous de l'assise et la deuxième aile est située vers le dessus.

L'armature selon l'invention permet d' optimiser le rapport poids / résistance de l'armature, en assurant une grande stabilité des flasques latéraux de l'armature, c'est à dire une grande résistance à la flexion, tout en permettant un gain d'encombrement du fait que la deuxième aile dirigée vers l'extérieur donne, pour une position déterminée de l'âme, plus d'espace en largeur pour l'utilisateur alors que la première aile dirigée vers l'intérieur de l'armature permet de réduire l'encombrement externe du siège, vers l'extérieur de celui-ci. Ou encore, pour une largeur d'utilisation donnée, les âmes des deux flasques peuvent être rapprochées l'une de l'autre, par rapport aux armatures de l'art antérieur utilisant des profilés de section en U, ce qui permet un gain d'encombrement externe du siège.

Les mécanismes d'articulation entre assise et dossier peuvent de ce fait être placés par exemple du côté extérieur de l'âme du flasque de l'armature de dossier sans accroître l'encombrement externe du siège. De plus, des mécanismes de commande d'inclinaison du dossier peuvent être placés sans difficulté du côté intérieur de l'armature, alors que, dans l'art antérieur pré-mentionné, l'aile avant du profilé de section en U constitue une gène pour la mise en place de tels mécanismes.

Préférentiellement, la dite première aile comporte sur son bord distant de l'âme un retour dirigé vers l'intérieur du siège, qui accroît la rigidité de cette aile et donc celle du profilé.

Dans le même but, la deuxième aile peut comporter également un second retour préférentiellement dirigé vers l'extérieur du profilé, c'est à dire vers l'avant dans le cas d'une armature de dossier, ou vers le dessus pour une armature d'assise.

D'autres caractéristiques et avantages apparaîtront dans la description qui va être faite à titre d'exemple d'une armature de dossier conforme à l'invention.

On se reportera aux dessins annexés dans lesquels :
- la figure 1 est une vue partielle en perspective d'une telle armature, dans laquelle seule la zone d'articulation avec l'armature d'assise est représentée ;
- la figure 2 est une vue schématique en coupe selon le plan P de la figure 1 ;
- la figure 3 est une vue latérale, selon la flèche F de la figure 1, du profilé utilisé ;
- la figure 4 illustre l'étape de démoulage du profilé selon l'invention, dans le cas d'une méthode de fabrication par moulage.

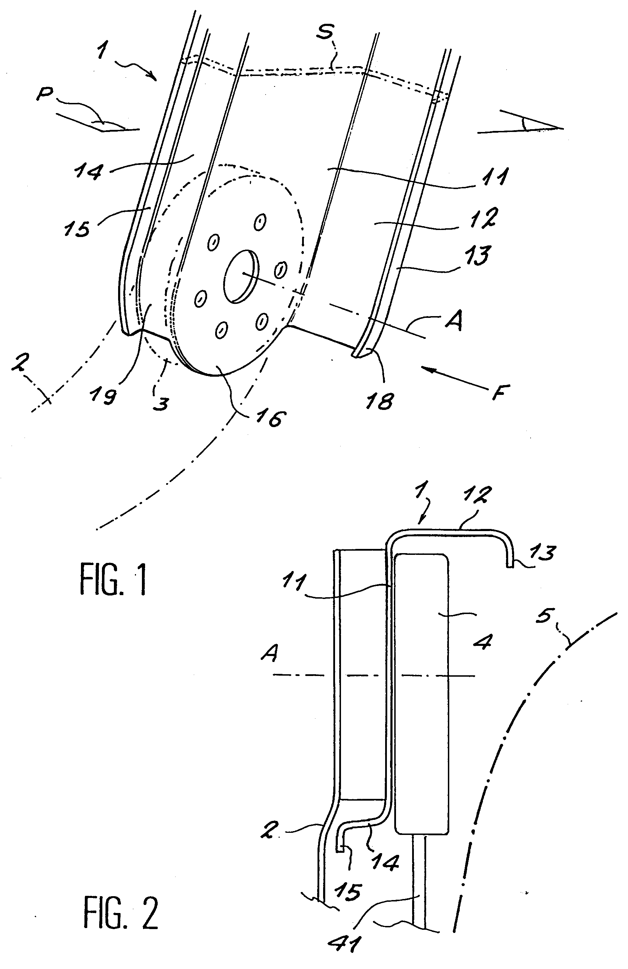

Le dessin de la figure 1 représente l'extrémité inférieure d'un flasque 1 d'une armature de dossier, articulée sur l'armature 2 de l'assise au moyen d'un mécanisme d'articulation 3 de type connu en soi. Le flasque 1 est formé d'un profilé dont la section S, représentée en traits mixtes sur la figure, a une forme générale en Z et qui comporte :
- une âme 11, s'étendant selon un plan orthogonal à la direction transversale du siège, qui correspond à la direction de l'axe d'articulation A ;
- une aile arrière 12 s'étendant à partir du bord arrière de l'âme, sensiblement perpendiculairement à celle-ci, et en direction du flasque, non représenté, situé de l'autre côté du dossier ;
- un retour d'aile 13 s'étendant à partir de la dite aile arrière vers l'avant du siège, sensiblement parallèlement à l'âme ;
- une aile avant 14 s'étendant à partir du bord avant de l'âme, perpendiculairement à celle-ci, vers l'extérieur du siège, c'est à dire en direction opposée de l'aile arrière ; et
- un retour d'aile avant 15 qui s'étend vers l'avant à partir du bord de la dite aile avant.

La forme particulière de la section du profilé conforme à l'invention est bien visible sur le dessin de la figure 2. On a également représenté sur cette figure le contour 5 de la surface d'assise disponible pour l'utilisateur, couramment désigné par l'expression "garde confort d'assise", ce qui permet de constater que l'aile avant 14 orientée vers l'extérieur de l'armature (vers le côté gauche sur la figure 2) permet de conserver un espace important entre le dit contour et le flasque, malgré la forme galbée du dit contour. On notera également que l'aile arrière 12, qui se trouve largement décalée vers l'arrière par rapport au dit contour, peut avoir de ce fait une largeur relativement importante et donc assurer une grande rigidité au profilé.

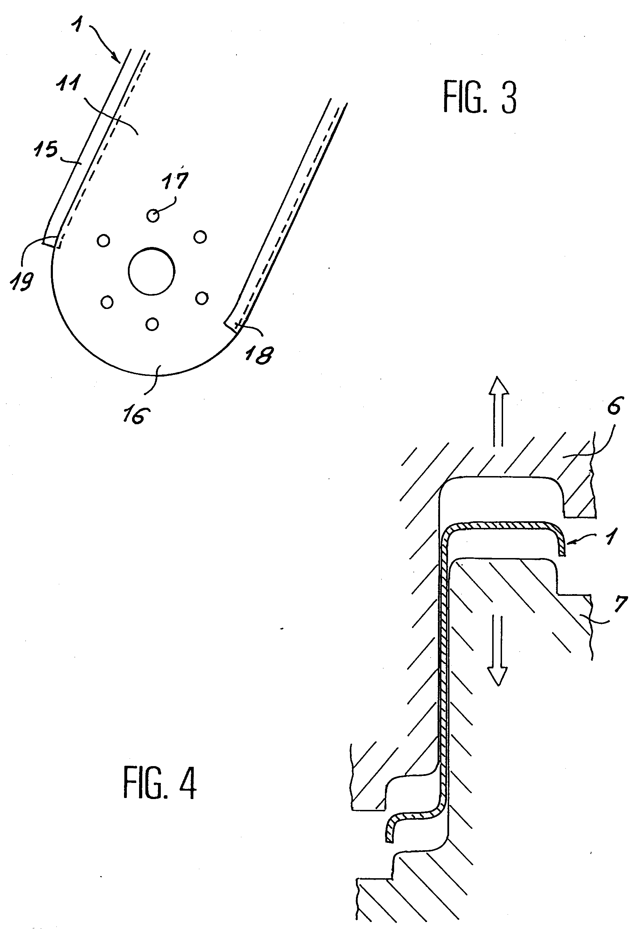

Comme on le voit bien sur le dessin de la figure 3, l'extrémité inférieure de l'âme est conformée en un arrondi 16 correspondant sensiblement à l'encombrement extérieur du mécanisme d'articulation 3. Ce mécanisme est implanté sur la face externe de l'âme 11, entre celle-ci et le flasque d'armature d'assise 2, et fixé sur la dite âme par vissage (seuls les trous 17 des vis, percés dans l'âme, ont été représentés). L'espace entre l'âme 11 et la garde confort d'assise permet par exemple de loger aisément de l'autre côté de l'âme un réducteur 4 d'un mécanisme de commande électrique d'inclinaison du dossier. On notera que l'élément de commande 41 (arbre ou flexible) de ce réducteur peut s'étendre vers l'avant sans nécessiter de découpe particulière du profilé, du fait que l'aile avant 14 est dirigée vers l'extérieur du siège.

Par ailleurs les deux ailes 12, 14 du flasque se prolongent vers le bas en dessous du niveau de l'axe A, leurs extrémités inférieures 18, 19 épousant la courbure de l'âme 11, ainsi que cela est représenté à la figure 3, ce qui permet de rigidifier au maximum l'armature au niveau de l'articulation, sans augmenter l'encombrement de l'extrémité inférieure des ailes lors de l'inclinaison du dossier, notamment vers l'avant.

Le profilé d'armature selon l'invention peut notamment être fabriqué par moulage. Sur le dessin de la figure 4, on a représenté en coupe transversale le profilé 1 et les deux coquilles 6, 7 du moule utilisé, lors de la phase de démoulage.

Comme on le comprendra aisément au vu de cette figure, un avantage supplémentaire de la forme du profilé d'armature selon l'invention résulte de la simplification des outils de moulage, la section en Z du profilé permettant de limiter les éléments du moule aux seules coquilles représentées, sans aucun élément de moule annexe. En effet, le démoulage s'effectue par un simple écartement des coquilles, selon les flèches de la figure 4.

## Revendications

1. Armature de siège comportant deux flasques latéraux profilés (1) constituant les côtés de l'armature, caractérisé en ce que les dits profilés (1) ont une section générale en forme de Z comportant :
- une âme centrale (11) s'étendant sensiblement dans un plan orthogonal à la direction transversale du siège,
- une première aile (12) s'étendant vers l'intérieur de l'armature à partir du bord de la dite âme situé vers l'extérieur du siège,
- une deuxième aile (14) s'étendant vers l'extérieur de l'armature à partir du bord de l'âme situé vers l'intérieur du siège.

2. Armature de siège selon la revendication 1, caractérisé en ce que la dite première aile (12) comporte sur son bord distant de l'âme un retour (13) dirigé vers l'intérieur du siège.

3. Armature de siège selon la revendication 1 ou 2, caractérisé en ce que la deuxième aile (14) comporte un retour (15) dirigé vers l'extérieur du profilé.

4. Armature de siège selon l'une quelconque des revendications 1 à 3, caractérisé en ce que les profilés (1) sont réalisés par moulage.

5. Siège pour véhicule automobile comportant une armature d'assise et une armature de dossier articulée sur l'armature d'assise, caractérisé en ce qu'il comporte une armature de dossier selon l'une quelconque des revendications précédentes et un mécanisme d'articulation (3) logé entre l'âme (11) du profilé (1) de l'armature de dossier et l'armature d'assise (2).

## Claims

1. Seat framework having two profiled lateral plates (1) constituting the sides of the framework, characterised in that the said profiled members (1) have an overall cross section in the form of a Z having:
- a central web (11) extending substantially in a plane orthogonal to the transverse direction of the seat,
- a first flange (12) extending towards the inside of the framework from the edge of the said web situated towards the outside of the seat,
- a second flange (14) extending towards the outside of the seat from the edge of the web situated towards the inside of the seat.

2. Seat framework according to Claim 1, characterised in that the said first flange (12) has on its edge distant from the web a return (13) directed towards the inside of the seat.

3. Seat framework according to Claim 1 or 2, characterised in that the second flange (14) has a return (15) directed towards the outside of the profiled member.

4. Seat framework according to any one of Claims 1 to 3, characterised in that the profiled members (1) are produced by casting.

5. Seat for a motor vehicle having a squab framework and a backrest framework articulated on the squab framework, characterised in that it includes a backrest framework according to any one of the preceding claims and an articulation mechanism (3) housed between the web (11) of the profiled member (1) of the backrest framework and the seat framework (2).

## Patentansprüche

1. Sitzrahmen mit zwei profilierten seitlichen Flanschen (1), die die Seiten des Rahmens bilden,
**dadurch gekennzeichnet, daß**
die Profile (1) einen im wesentlichen Z-förmigen Querschnitt haben mit:
- einem zentralen Kern (11), der sich im wesentlichen in einer zur Querrichtung des Sitzes orthogonalen Ebene erstreckt,
- einem ersten Flügel (12), der sich vom zum Äußeren des Sitzes hin liegenden Rand des Kerns ins Innere des Rahmens erstreckt,
- einem zweiten Flügel (14), der sich vom zum Inneren des Sitzes hin liegenden Rand des Kerns zum Äußeren des Rahmens hin erstreckt.

2. Sitzrahmen nach Anspruch 1, dadurch gekennzeichnet, daß der erste Flügel (12) an seinem vom Kern entfernten Rand eine zum Inneren des Sitzes gerichtete Krempe aufweist.

3. Sitzrahmen nach Anspruch 1 oder 2, dadurch gekennzeichnet, daß der zweite Flügel (14) eine zum Äußeren des Profils hin gerichtete Krempe aufweist.

4. Sitzrahmen nach einem der Ansprüche 1 bis 3, dadurch gekennzeichnet, daß die Profile (1) durch Pressen erzeugt sind.

5. Sitz für ein Kraftfahrzeug mit einem Sitzflächenrahmen und einem an den Sitzflächenrahmen angelenkten Rückenlehnenrahmen, dadurch gekennzeichnet, daß er einen Rückenlehnenrahmen nach einem der vorhergehenden Ansprüche und einen zwischen dem Kern (11) des Profils (1) des Rückenlehnenrahmens und dem Sitzflächenrahmen (2) untergebrachten Gelenkmechanismus (3) aufweist.
